# EUROPEAN PATENT SPECIFICATION

(11) **EP 2 278 134 B1**
(45) Date of publication and mention of the grant of the patent: **15.10.2014**
(21) Application number: 09008392.4
(22) Date of filing: 26.06.2009
(51) Int. Cl.: F01P 7/16, F02B 29/04

(54) **Method of defining the operating parameters for the piston-cyclinder liner unit in the low-speed compression-ignition two-stroke engines**
Verfahren zur Bestimmung der Betriebsparameter für die Kolbenzylinderbüchse in niedertourigen Zweitaktdieselmotoren
Procédé pour définir les paramètres de fonctionnement pour l'unité de ligne de piston-cylindre dans les moteurs à deux temps à allumage par compression à basse vitesse

(43) Date of publication of application: 26.01.2011
(73) Proprietor: H. Cegielski - SERVICE Sp.z.o.o., 61-485 Poznan (PL)
(72) Inventor: Sedlacek, Frantisek, 8479 Alticon (CH); Wyszynski, Jacek, 61-663 Poznan (PL); Heppel, Konrad, 61-218 Poznan (PL); Kulesza, Marek, 60-489 Poznan (PL)
(74) Representative: Passowicz, Marek

(56) References cited:
- EP-A1- 0 508 068
- GB-A- 2 420 846
- JP-A- 59 141 718
- "4.3-Hauptbauteile" In: Prof.Dr.Ing.Rudolf Sperber: "Technisches Handbuch Dieselmotoren" 1 January 1990 (1990-01-01), VEB Verlag Technik Berlin , Berlin , XP002563988 ISBN: 3341007970 vol. 1, , pages 83-85 * page 84, line 9 - line 14 *

## Description

The subject-matter of an invention is a method of defining the operating parameters for the piston-cylinder liner unit in the low-speed compression-ignition two-stroke engines, particularly in the marine engines.

The mentioned above engines are supplied with charging air from the turbocharger which directs the air through the air cooler and incorporated water mist catcher which is designed to separate condensate from the air. The maximum possible amount of condensate is separated from the air with an aim of avoiding the creation of the sulphur corrosion.

Document EP 0 508 068 A1 shows a method to keep the temperature of the charging air higher than the dew point.

However, the experience gained so far showed that it is not possible to completely separate condensate from the air because the separators experience failures sometimes. Thus, to reduce the risk of corrosion, during the compression stroke the temperature of the walls in the upper part of cylinder liners is kept slightly above the dew-point, i.e., it reaches 270°C. Since the cylinder oil, used for lubricating the mating elements of the unit, reaches its flash-point at the temperature circa 240°C, then, at higher temperature partial burning of the oil occurs. As a result, only a part of the cylinder lubricating oil on the cylinder liner surface is used for lubrication, whereas, the remaining amount of it undergoes the process of carbonization. The resulting impurities in the form of soot and carbon deposit between piston rings and cylinder liner which, in result, causes deterioration of the mating conditions. Such situation leads to rapid wear of piston rings and the cylinder surface and it can even result in seizure eventually.

The attempt was made to fight with such phenomenon. Despite the fact that standard wear rate of the cylinder liner surface is the highest in its upper part, thus, it requires higher cylinder oil dosage, only 30% of the cylinder lubricating oil was supplied to the cylinder liner upper lubricating grooves. The rest of the cylinder lubricating oil was supplied to the area of the lower lubricating grooves to reduce carbon depositing. The deficiencies can still be more severe if there would be applied not certified piston rings and/or spare cylinder liners of various origin often characterized by doubtful quality, non-optimal material structure or poor final machining.

The essence of the invention is that with all thermal insulating elements, like insulating tubes in the cylinder liner collars or outer insulating bandages, the measurements of the temperature and relative humidity of the charging air before the turbocharger, the charging air pressure after the air cooler as well as the barometric pressure in the engine room are taken. On the grounds of the known physics correlations between pressure, temperature and air humidity presented as an example in the diagram, allow to define the dew-point temperature of the charging air after the air cooler. This, in turn, forms a basis for defining the minimum temperature of water on the inlet to the air cooler in order that the temperature of the charging air is slightly above the dew-point. At the same time the temperature of the surface of the cylinder liner walls is constantly monitored and by means of known measuring equipment the temperature of inlet water for cylinder cooling is properly adjusted to secure that the temperature of the surface of the cylinder liner walls be lower than the temperature of the cylinder oil flash-point.

Such procedure allows to set the temperature of the cylinder liner walls at the level circa 200°C. This, in turn, allows for correct utilization of cylinder oil since the temperature of the cylinder liner walls is lower than the cylinder oil flash-point which allows to set the distribution of the cylinder lubricating oil in the lower and upper lubricating levels at a rate 50/50% to 40/60%. The charging air with no condensate supplied to the cylinder liner space considerably prevent from forming the sulphuric acid, which is the reason for corrosion. In this case the corrosion rate is low. The advantages gained by applying such solution allow to protect piston rings and the cylinder liner surface from seizure. Moreover, these allow to lower the mean wear rate of the cylinder liner and provide more secure operation of the cylinder liner-piston unit, especially when more and more suppliers offer the cylinder liners of poor and different quality.

### Example

Outer insulating bandages and insulating tubes in the cylinder liner collar were removed. The engines was operating at 83% of the rated power and the temperature of the cylinder liner cooling water on the inlet was set to 70°C and the distribution of the cylinder lubricating oil between the upper and lower lubricating levels was set at the rate 50/50%. Standard cylinder lubricating oil used had a flash-point ca' 240°C. The air parameters before the turbocharger were measured - the temperature was 27°C and the relative humidity was 42%. Further on, it was defined that the charging air pressure after the air cooler was 1,7 bar, whereas, the barometric pressure in the engine room was 1024 hPa. On the grounds of the diagram presenting the correlations between temperature, humidity and pressure it was defined that the temperature of the dew-point of the charging air after the air cooler was 30°C. The used diagram is conventionally used for diesel engines. That served as a basis for defining the minimum temperature of water on the air cooler inlet at the level of 35°C so that the charging air temperature was slightly higher than the dew-point. At the same time, by means of two thermocouples installed in each collar of the cylinder liner, the temperature of the cylinder liner surface had been constantly monitored. This in result allowed to adjust the temperature of the cylinder cooling water on the inlet and maintain the temperature of the cylinder liner surface at the level of 160-190°C.

## Claims

1. A method or determining the operating parameters for the unit of the piston-cylinder liner in the low-speed compression-ignition two-stroke engines, which are mainly used as marine engines, comprising the following steps:
- removing the insulating elements, i.e. the insulating tubes in the cylinder liner collar and insulating outer bandages from the cylinder liners;
- measuring the temperature and relative humidity of the supercharging air before the turbosupercharger as well as the supercharging air pressure after the air cooler and barometric pressure in the engine room;
- determining, on the base of the known physics dependences between pressure, temperature and air humidity illustrated for example in the form of a graph, the temperature of the dew-point of the supercharging air after the air cooler;
- determining the minimal temperature of the entering water in the inlet of the air cooler in order that the temperature of the charging air is maintained slightly higher than the dew-point;
- continual monitoring of the temperature of the cylinder liner bearing surface;
- adjusting, on the base of the parameters identified above and by means of known measuring equipment, the temperature of the inlet cooling water so that the temperature of the cylinder liner bearing surface is kept lower than the flash point of a cylinder oil.

2. The method according to claim 1, **wherein** monitoring of the temperature of the cylinder liner bearing surface is made by means of two thermocouples installed in each collar of the cylinder liner.

3. The method according to claim 1 or 2, **wherein** the determining temperature of the dew-point of the supercharging air behind the air cooler is realized by means of the regulating characteristics usually employed for the diesel engines.

## Patentansprüche

1. Die Methode der Bestimmung von Betriebsparametern der Anlage Kolben-Zylinderbuchse in langsamlaufenden Zweitaktmotoren, die hauptsächlich bei Schiffsmotoren Anwendung findet, umfasst folgende Etappen:
- Entfernung der Wärmeisolierung von den Zylinderbuchsen, wie Isolierröhrchen in Buchsenflanschen, bzw. externe Isolierbandagen,
- Messung der Temperatur und der relativen Luftfeuchte der Ladeluft vor dem Turbolader und Ladeluftdruckmessung hinter dem Kühler, sowie Messung des barometrischen Drucks im Maschinenraum,
- Bestimmung des Taupunktes der Ladeluft hinter dem Kühler anhand der aus der Physik bekannten Zusammenhänge zwischen Druck, Temperatur und Luftfeuchte, was beispielsweise als Diagramm dargestellt wird,
- Bestimmung der minimalen Temperatur des Zulaufwassers des Luftkühlers, so dass die Ladelufttemperatur ein wenig über dem Taupunkt liegt,
- ständige Aufsicht über die Temperatur der Zylinderlaufbahnwände,
- Regelung - anhand der oben genannten Parameter und mit Hilfe der bekannten Anlagen - der Temperatur des Zulaufwassers für die Zylinderkühlung, so dass die Temperatur der Zylinderlaufbahnwände niedriger ist als Zylinderölzündpunkt.

2. Methode nach Anspruch 1, **dadurch gekennzeichnet, dass** die Aufsicht über die Temperatur der Zylinderlaufbahnwände mit Hilfe von zwei Thermoelementen erfolgt, die an jeden Flansch der Zylinderbuchse montiert werden.

3. Methode nach Anspruch 1 oder 2, **dadurch gekennzeichnet, dass** die Bestimmung des Taupunktes der Ladeluft hinter dem Kühler mit Hilfe von Regeleigenschaften erfolgt, die in der Regel für Dieselmotoren verwendet werden.

## Revendications

1. La méthode de détermination des paramètres de fonctionnement du système chemise-alésage à cylindre dans les moteurs deux-temps à haute compression à basse vitesse, qui est utilisée principalement dans les moteurs des navires, se compose des étapes suivantes:
- l'écartement des chemises des éléments thermiques tels que les tubes d'isolement en bride de la chemise ou les bandages d'isolation extérieurs,
- l'exécution des mesurages de la température et de l'humidité relative de l'air de chargement avant le turbocompresseur et du mesurage de la pression d'air d'alimentation en amont du refroidisseur et de la pression barométrique dans le compartiment à moteurs,
- la détermination sur la base des relations physiques connues entre la pression, la température et l'humidité d'air, illustrées sous la forme d'un graphique, de la température du point de rosée d'air de suralimentation en amont du refroidisseur,
- la détermination de la température minimale de l'eau de l'entrée au refroidisseur de l'air de façon à ce que la température de l'air de suralimentation soit légèrement supérieure à la température du point de rosée,
- la surveillance continue de la température des parois de la partie plaine du cylindre,
- le réglage, suivant les paramètres précités, et à l'aide des dispositifs connus, de la température de l'eau d'entrée pour le refroidissement des cylindres de façon à ce que la température des parois de la partie plaine du cylindre soit inférieure à la température de l'allumage de l'huile de cylindre.

2. La méthode selon la revendication 1, **caractérisée en ce que** la surveillance de la température des parois de la partie plaine du cylindre se fait à l'aide de deux thermopiles installées sur chaque bride de la chemise.

3. La méthode selon les revendications 1 ou 2, **caractérisée en ce que** la définition de la température du point de rosée de l'air de suralimentation en amont du refroidisseur se fait à l'aide des paramètres de réglage utilisé habituellement pour les moteurs à haute compression.
